# EUROPEAN PATENT APPLICATION

(11) **EP 2 596 858 A1**
(43) Date of publication of application: **29.05.2013**
(21) Application number: 11809487.9
(22) Date of filing: 16.05.2011
(51) Int. Cl.: B01J 2/06, B01F 3/08, B01F 5/00, B01J 13/00

(54) **DEVICE FOR FORMING DROPLETS AND METHOD FOR FORMING DROPLETS**

(30) Priority: 23.07.2010 JP 2010165513
(71) Applicant: Nitto Denko Corporation, Ibaraki-shi Osaka 567-8680 (JP)
(72) Inventor: SUGIURA, Shinsuke, Ibaraki-shi Osaka 567-8680 (JP); SAOMOTO, Kenjiro, Ibaraki-shi Osaka 567-8680 (JP); TOYOOKA, Takashi, Ibaraki-shi Osaka 567-8680 (JP)
(74) Representative: Müller-Boré & Partner Patentanwälte
(86) International application number: PCT/JP2011/061172
(87) International publication number: WO 2012/011313

(57) **Abstract**

The present invention makes it possible to stably obtain uniform droplets 21 and embolus particles 25 in large quantities.

Disclosed is a device for droplet formation 1 which comprises: a dispersed-phase outlet 101a through which a dispersed-phase material 2, e.g., an aqueous gelatin solution, is discharged; continuous-phase outlets 111a, 121a through which a continuous-phase material 3, e.g., an oil, is discharged; a confluence part 131 which communicates with the dispersed-phase outlet 101a and the continuous-phase outlets 111a, 121a and in which the dispersed-phase material 2 is caused to flow into the liquid of the continuous-phase material 3 at a given constant static pressure; and a droplet formation part 132 which has been disposed on the downstream side of the confluence part 131 and in which the dispersed-phase material 2 is allowed to become droplets by means of cohesive force.

## Description

### Technical Field

The present invention relates to a droplet formation device and a droplet formation method, each of which allows formation of droplets for use as gelatin embolus particles.

### Background Art

Artery embolization method known as a remedy for liver cancer, uterine myoma, renal cancer, kidney cancer, and the like is a method in which an anticancer agent is injected to a cancer (myoma) tissue by using a micro catheter, and then a nonionic contrast media is used to block, with embolus particles, a blood vessel leading to the cancer (myoma) tissue to stop nourishment of the cancer (myoma) to necrotize the same. This remedy preferably enable selective use of embolus particles according to the size of the blood vessels so as to block the blood vessel at a closest possible portion to the targeted part, without negative effects to the healthy portions.

To this end, for example, Patent document 1 discloses a method which ejects an aqueous gelatin solution from a leading end of a nozzle into a hydrophobic solvent, while the nozzle is dipped into the hydrophobic solvent, and then pulls out the nozzle from the hydrophobic solvent to form droplets of desirable diameters to serve as embolus particles.

Further, Patent document 2 discloses: a method which causes a dispersed-phase material such as water to flow from a dispersed-phase supply port in a direction crossing a flow of the continuous-phase material so as to have the continuous-phase material enter a part of the dispersed-phase supply port to continuously form droplets of the dispersed-phase material by using a shear force of the continuous-phase material; and a method which sets a confluence point, where the flows of continuous-phase material encounter each other, nearby the end of a dispersed-phase outlet, and causes the dispersed-phase material from the dispersed-phase outlet towards this confluence point to continuously form droplets of the dispersed-phase material.

### Prior Art Document

### Patent Documents

[Patent Document 1] Japanese Unexamined Patent Publication No. 77062/2010 (Tokukai 2010-77062)
[Patent Document 2] Japanese Patent No. 3746766

### Summary of Invention

### Technical Problem

However, the above traditional methods have the following problems. Namely, even if the nozzle and the passage wall of the dispersed-phase supply port are hardly wettable with respect to a dispersed-phase material such as aqueous gelatin solution or the like, the droplet diameter varies at an early stage after the start of droplet formation, which leads to formation of no droplets at the end. For this reason, the above methods are not suitable for stable formation of a large quantity of uniform droplets. It should be noted that this problem takes place not only in the medical field such as artery embolization method, or the like, but also in various other fields using uniform droplets or particles: e.g., fields of chemistry, biology, environment, agriculture and fisheries, foods, and the like.

The present invention is made in view of the above problem, and it is an object of the present invention to provide a droplet formation device and a droplet formation method, each of which is capable of stably forming a large quantity of uniform droplets and particles.

### Technical Solution

After dedicated studies, the inventors of the present invention found out that the cause of the above problem is that frequent contact of the dispersed-phase material to the passage wall facilitates adhesion of the dispersed-phase material, thus weakening the hydrophobic/hydrophilic effect of the passage wall at an early stage. Taking this factor into account, the inventors have made the following invention.

Specifically, the present invention is a droplet formation device, including a dispersed-phase outlet through which a liquid of a dispersed-phase material having a cohesive force flows out; one or more continuous-phase outlets through which a liquid of the continuous-phase material flows out, the continuous-phase material capable of generating an interfacial tension at its interface with the dispersed-phase material; a confluence part in communication with the dispersed-phase outlet and the one or more continuous-phase outlets, through which the dispersed-phase material flows in the liquid of the continuous-phase material under a constant static pressure; and a droplet formation part disposed on a downstream side of the confluence part, in which the dispersed-phase material is allowed to become droplets by means of the cohesive force.

In the above structure, the liquid of the dispersed-phase material flowed out of the dispersed-phase outlet and the liquid of the continuous-phase material flowed out of the continuous-phase outlet are converged at the confluence part communicated with the dispersed-phase outlet and the continuous-phase outlet. The confluence part causes the dispersed-phase material to flow in the liquid of the continuous-phase material under the constant static pressure. Thus, when the dispersed-phase material flowed out of the dispersed-phase outlet and the continuous-phase material converge, deviation in the flow of the dispersed-phase material is restrained, and substantially all the dispersed-phase material and the continuous-phase material flow straight forward in the flowing direction. As a result, the dispersed-phase material less likely contacts the periphery of the dispersed-phase outlet, as compared with a case of causing the dispersed-phase material to become droplets by deviating the static pressure immediately after the dispersed-phase material flows out; e.g., a case of having the continuous-phase material collide the end surface of the dispersed-phase outlet in a perpendicular direction to cause the dispersed-phase material to become droplets by means of shear force. This restrains problems caused by adhesion of the dispersed-phase material to the dispersed-phase outlet.

Further, when the dispersed-phase material flows in the continuous-phase material, the dispersed-phase material forms a stick-like flow continuous from the dispersed-phase outlet. The free energy on the surface of the dispersed-phase material increases proportionally to the surficial area of the stick-like flow of dispersed-phase material. When the flow in the droplet formation part elongates the flow of dispersed-phase material, thus causing the free energy thereon to increase up to a predetermined level or higher, the stick-like flow of dispersed-phase material is deformed due to a cohesive force and divided into pieces. The divided pieces of the dispersed-phase material are formed into spherical droplets with the minimum surficial area by means of cohesive force so as to minimize the free energy on its surface. At this time, since the dispersed-phase material flows under a constant static pressure in the confluence part, variation in the outline of the stick-like flow of dispersed-phase material is kept small. Therefore, the stick-like flow of dispersed-phase material is divided at substantially the same intervals, forming droplets with substantially the same volume. Since the above structure allows the dispersed-phase material to be successively formed into spherical droplets with substantially the same size, it is possible to stably obtain a large quantity of uniform droplets or uniform particles using the droplets.

The present invention may further include: a dispersed-phase outlet part through which the dispersed-phase material flows out in a predetermined direction from the dispersed-phase outlet; and one or more continuous-phase outlet parts through which the continuous-phase material flows out from the one or more continuous-phase outlets, in parallel to the flowing direction of the dispersed-phase material.

In the above structure, when the dispersed-phase material and the continuous-phase material flow out of the dispersed-phase outlet and the continuous-phase outlets and flow into the confluence part, respectively, the dispersed-phase material and the continuous-phase material flow in the same direction. Thus, a constant static pressure in the confluence part is easily realized. With this, the dispersed-phase material is easily prevented from contacting the periphery of the dispersed-phase outlet when flowing out therefrom, and it is possible to restrain instable intervals of dividing the dispersed-phase material which is caused by variation in the outline of the flow of the dispersed-phase material while the dispersed-phase material is flowing. Thus, droplets with substantially the same size are easily obtained.

The present invention may be adapted so that the one or more continuous-phase outlets comprise a plurality of continuous-phase outlets which are arranged symmetrically with respect to the dispersed-phase outlet.

With the above structure, the dispersed-phase material flows in parallel to the flows of the continuous-phase material, while being sandwiched between the flows of the continuous-phase material. It is therefore possible to more easily realize the constant static pressure. This further facilitates formation of uniform droplets, while more effectively preventing problems caused by adhesion of the dispersed-phase material to the periphery of the dispersed-phase outlet.

The present invention may be adapted so that each of the dispersed-phase outlet and the continuous-phase outlets has a shape which is symmetrical with respect to a line in a direction of symmetrically arranging the dispersed-phase outlet and the continuous-phase outlets.

With the above structure, the dispersed-phase material and the continuous-phase material are able to flow into the confluence part with a flow out area which is even relative to the direction of symmetrical arrangement and the direction vertical to the direction of symmetrical arrangement. This further facilitates realization of the constant static pressure. As a result, it is possible to further facilitate formation of uniform droplets, while more effectively preventing problems caused by adhesion of the dispersed-phase material to the periphery of the dispersed-phase outlet.

The present invention may be adapted so that an opening diameter of each of the continuous-phase outlet relative to a direction vertical to the line in the direction of the symmetrical arrangement is set to be larger than that of the dispersed-phase outlet.

In the above structure, the opening of each of the continuous-phase outlets takes up a broad area around the dispersed-phase outlet. It is therefore possible to envelop the entire flow of the dispersed-phase material from the dispersed-phase outlet by the flows of the continuous-phase material, while the dispersed-phase material flows. Thus, the constant static pressure is more easily realized. As a result, it is possible to further facilitate formation of uniform droplets, while more effectively preventing problems caused by adhesion of the dispersed-phase material to the periphery of the dispersed-phase outlet.

The present invention may be adapted so that the droplet formation part has a reduction part whose flow passage area is reduced towards the downstream side.

With the above structure, the reduction part causes convergence of the flows of the continuous-phase material towards the dispersed-phase material and applies an external force to the dispersed-phase material, thus forcedly dividing the dispersed-phase material into droplets. It is therefore possible to shorten the confluence part and the droplet formation part as compared with a case of dividing the dispersed-phase material by the relation of the free energy on the surface and the cohesive force. Further, the reduction part prevents stagnation of the dispersed-phase material and the continuous-phase material. This enables stable and successive formation of the droplets.

The present invention may further include: a first base member having a first border surface on which a first passage forming part is formed, the first passage forming part constituting parts of the dispersed-phase outlet, the dispersed-phase outlet part, the continuous-phase outlet, the continuous-phase outlet part, the confluence part, the droplet formation part, the reduction part, and a discharge port; and a second base member having a second border surface combined with the first border surface of the first base member, the second border surface having thereon a second passage forming part constituting parts of the dispersed-phase outlet, the dispersed-phase outlet part, the continuous-phase outlet, the continuous-phase outlet part, the confluence part, the droplet formation part, the reduction part, and the discharge port.

With the above structure, a desirable droplet formation device is formed with two members, i.e., the first base member and the second base member.

The present invention may be used for production of embolus particles. This allows easily production of embolus particles with desirable grain diameters.

Another aspect of the present invention is a droplet formation method, including causing a dispersed-phase material to flow into and flow within a liquid of a continuous-phase material under a constant static pressure, the continuous-phase material being capable of generating an interfacial tension at its interface with the dispersed-phase material, thereby forming the dispersed-phase material into droplets by a cohesive force.

With the above method, as in the droplet formation device of the present invention, adhesion of the dispersed-phase material to the periphery when the dispersed-phase material flows out is restrained. It is therefore possible to cause the dispersed-phase material to successively form spherical droplets with substantially the same size. Thus, a large quantity of uniform droplets or uniform particles using the droplets are obtainable.

### Advantageous Effects of Invention

With the present invention, a large quantity of uniform droplets and particles are stably obtained.

### Brief Description of Drawings

[FIG. 1] FIG. 1 is an explanatory diagram showing a process of forming embolus particles, by using a droplet formation device.
[FIG. 2] FIG. 2 is an explanatory diagram showing a schematic configuration of the droplet formation device viewed from the above.
[FIG. 3] FIG. 2 is a cross sectional view taken along the line A-A, and is an explanatory diagram showing assembling of the droplet formation device.
[FIG. 4] FIG. 4 is a schematic cross sectional view of the lower gas supply mechanism.
[FIG. 5] FIG. 5 is an explanatory diagram showing a schematic configuration of the droplet formation device viewed from the above.
[FIG. 6] FIG. 6 is an explanatory diagram showing a schematic configuration of the droplet formation device viewed from the above.

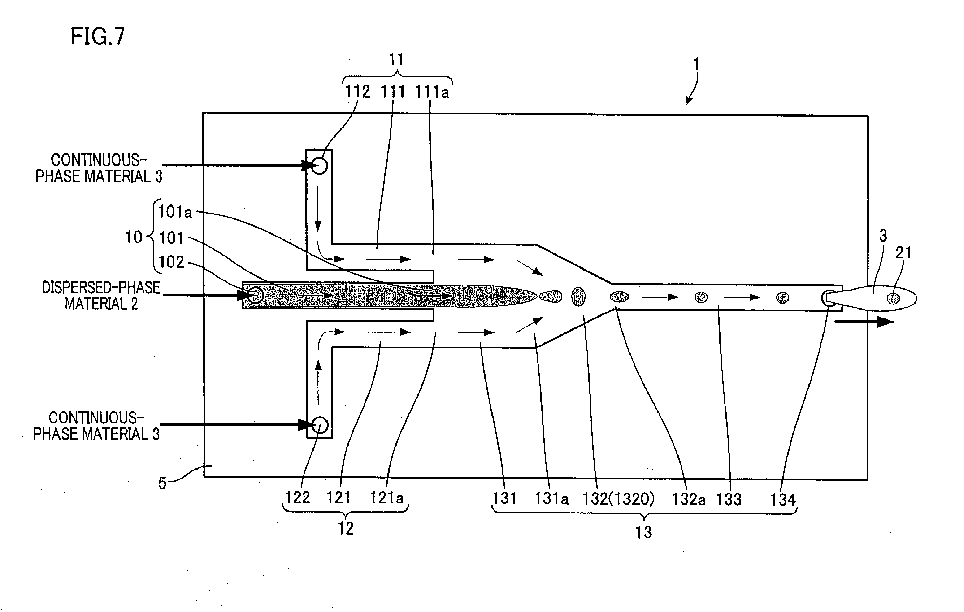

[FIG. 7] FIG. 7 is an explanatory diagram showing formation of droplets.
[FIG. 8] FIG. 8 is an explanatory diagram showing a process of forming embolus particles, by using a droplet formation device.
[FIG. 9] FIG. 9 is a diagram showing an analysis result of Example 1.
[FIG. 10] FIG. 10 is a diagram showing an analysis result of Example 1.
[FIG. 11] FIG. 11 is a diagram showing an analysis result of Comparative Example 1.
[FIG. 12] FIG. 12 is a diagram showing an analysis result of Comparative Example 1.
[FIG. 13] FIG. 13 is an explanatory diagram showing a schematic configuration of the droplet formation device viewed from the above.
[FIG. 14] FIG. 14 is an explanatory diagram showing a schematic configuration of the droplet formation device viewed from the above.

### Description of Embodiments

The following describes a preferable embodiment of the present invention, with reference to attached drawings.

### (Droplet Formation Device 1)

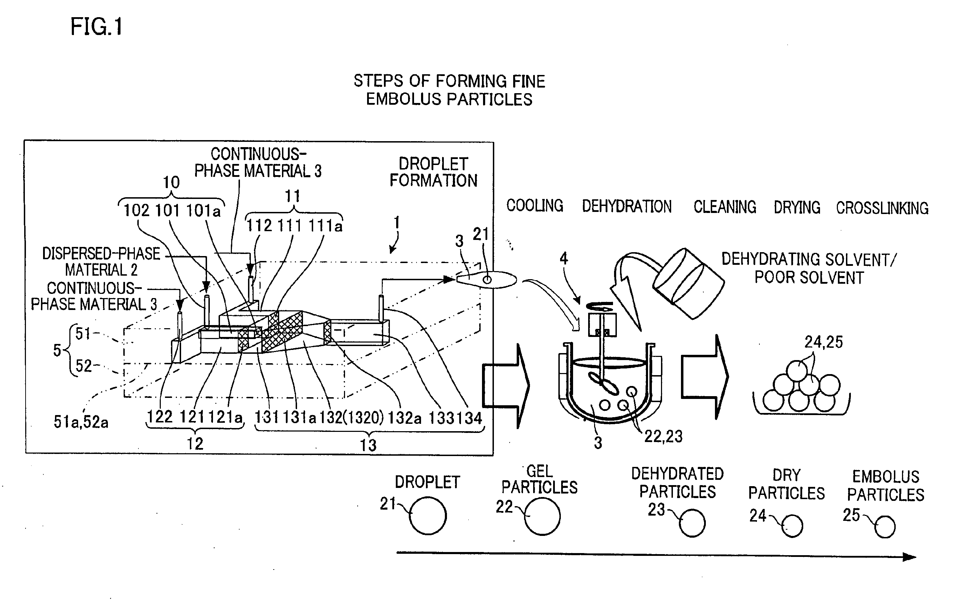

As shown in FIG. 1, a droplet formation device 1 of the present embodiment includes: a dispersed-phase outlet 101a through which a dispersed-phase material 2 such as an aqueous gelatin solution to flow out; a continuous-phase outlets 111a, 121a through which a continuous-phase material 3 such as oil to flow out; a confluence part 131 communicating with the dispersed-phase outlet 101a and the continuous-phase outlets 111a, 121a, through which the dispersed-phase material 2 flows in the continuous-phase material 3 under a constant static pressure; and a droplet formation part 132 disposed on a downstream side of the confluence part 131, in which the dispersed-phase material 2 is allowed to become droplets by means of cohesive force. With this structure, the droplet formation device 1 is able to cause the dispersed-phase material 2 to flow out and flow under a constant static pressure in the continuous-phase material 3 which generates an interfacial tension at the interface with the dispersed-phase material 2, thus realizing a droplet formation method in which the dispersed-phase material 2 is allowed to become droplets by means of the cohesive force. Note that the droplet formation method is not limited to the one realized by the droplet formation device 1 of the present embodiment; however, the method is easily realized by the droplet formation device 1. The dispersed-phase material 2 and the continuous-phase material 3 are detailed later.

Specifically, the droplet formation device 1 has a base 5 in a shape of a parallelepiped. The following description supposes that the droplet formation device 1 takes a horizontal position such that the thickness direction of the base 5 matches the gravity direction, and one surface and another surface perpendicularly crossing the gravity direction are the top surface and the bottom surface respectively. However, the present invention is not limited to such a case. That is, the horizontal position of the droplet formation device 1 may take a reversed-horizontal position which is 180 degrees opposite of the horizontal position. Alternatively, the position of the droplet formation device 1 may be such that the one surface and the other surface of the base 5 are slanted, perpendicular to the gravity, or vertical so as to have the gravity affect formation of the droplets 21.

Inside the base 5 is formed a passage through which a dispersed-phase material 2 flows into and flows within the continuous-phase material 3 under a constant static pressure, and in which the dispersed-phase material 2 is allowed to become droplets by means of cohesive force. The passage includes a first flow system 10 through which the dispersed-phase material 2 supplied from the outside the base 5 flows; two second flow systems 11, 12 through which the continuous-phase material 3 supplied from the outside the base 5 flows; a third flow system 13 through which the dispersed-phase material 2 and the continuous-phase material 3 flows while contacting with each other and flows out of the base 5.

### (Droplet Formation Device 1: First Flow System 10)

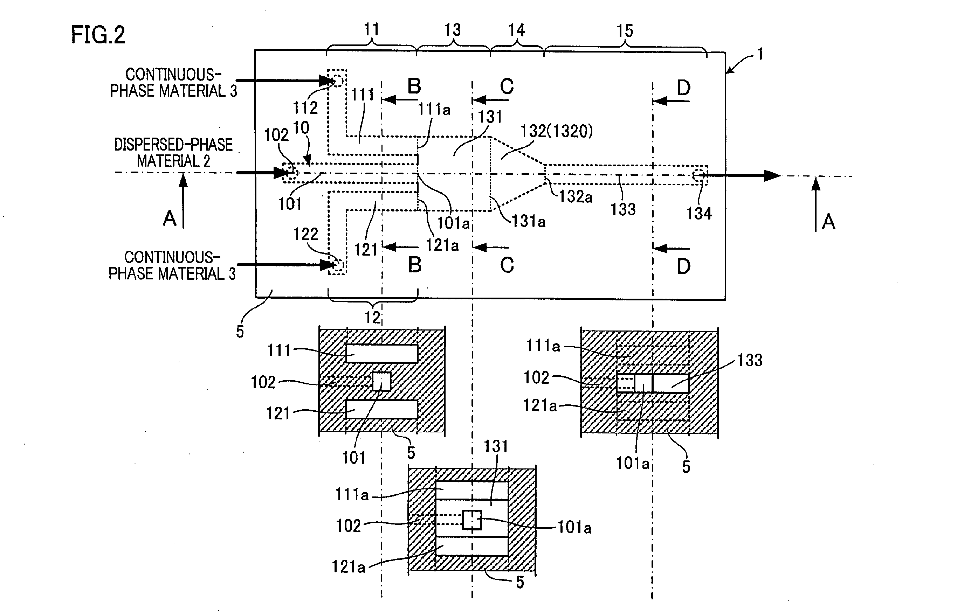

As shown in FIG. 2, the first flow system 10 has a dispersed-phase material supply part 102, a dispersed-phase outlet part 101, and a dispersed-phase outlet 101a. The dispersed-phase material supply part 102 is disposed on one end side of the base 5 relative to its length so as to be in a position at the uppermost stream relative to the flowing direction of the dispersed-phase material 2. The dispersed-phase material supply part 102 is formed as a through hole extending in a direction corresponding to the thickness direction of the base 5. The upper end of the dispersed-phase material supply part 102 is an opening formed on the top surface of the base 5. Further, to the upper end (opening) of the dispersed-phase material supply part 102 is connected a not-shown device for supplying the dispersed-phase material 2. This device for supplying is provided with a temperature controller or a flow rate adjuster, and is configured to supply the dispersed-phase material 2 with a desirable temperature and at a desirable flow rate and flow velocity into the dispersed-phase material supply part 102.

The lower end (opening) of the dispersed-phase material supply part 102 communicates with the upperstream side (one end side) of the dispersed-phase outlet part 101. The dispersed-phase outlet part 101 has a passage space having a rectangular shape when viewed from the above. This passage space has a rectangular longitudinal cross section when taken in a direction perpendicular to the flowing direction of the dispersed-phase material 2. Further, the dispersed-phase outlet part 101 is disposed parallel to the top surface in the middle of the base 5 relative to the thickness direction and the width direction so that the flow rate of the dispersed-phase material 2 is not increased or decreased due to an effect of the gravity. The downstream end of the dispersed-phase outlet part 121 communicates with a confluence part 131 of the third flow system 13 serving as the dispersed-phase outlet 101a.

The first flow system 10 with the above described structure allows the dispersed-phase material 2 supplied from the dispersed-phase material supply part 102 to flow horizontally via the dispersed-phase outlet part 101, and horizontally flow into the confluence part 131 from the dispersed-phase outlet 101a.

### (Droplet Formation Device 1: Second Flow Systems 11, 12)

On both sides of the first flow system 10 relative to a horizontal direction are disposed second flow systems 11, 12. The second flow systems 11, 12 are structured so that the continuous-phase material 3 flows out parallel to flowing direction of the dispersed-phase material 2 flowed out of the dispersed-phase outlet 101a. Note that the number of the second flow systems is not limited to two as in the case of the second flow systems 11, 12, as long as the number of the second flow systems is one or more.

Specifically, the second flow systems 11, 12 have continuous-phase material supply parts 112, 122, continuous-phase outlet parts 111, 121, and continuous-phase outlets 111a, 121a, respectively. The continuous-phase material supply parts 112, 122 are each disposed on one end side of the base 5 relative to its length so as to be positioned at the uppermost stream relative to the flowing direction of the continuous-phase material 3. The continuous-phase material supply parts 112, 122 are each formed in the form of a through hole extending in the thickness direction of the base 5. The upper end of each continuous-phase material supply parts 112, 122 is opened on the top surface of the base 5. Further, to the upper end (opening) of each continuous-phase material supply parts 112, 122 is detachably connected a not-shown device for supplying the continuous-phase material 3. Note that the device for supplying has a temperature controller and a flow rate adjuster, and is configured to supply the continuous-phase material 3 at a desirable temperature, flow amount, and flow rate to the continuous-phase material supply parts 112, 122.

The lower ends (openings) of the continuous-phase material supply parts 112, 122 communicate with the upperstream side (one end side) of the continuous-phase outlet parts 111, 121, respectively. The continuous-phase outlet parts 111, 121 each have a passage space which is in an L-shape when viewed from the above. The L-shaped continuous-phase outlet parts 111, 121 are disposed so that their respective upperstream sides extend away from each other, and that the continuous-phase material supply parts 112, 122 are disposed apart from each other as well as from the dispersed-phase material supply part 102 disposed in the middle portion. This improves workability of attaching/detaching the devices for supplying materials to the supply units 102, 112, 122, respectively.

Further, the respective downstream sides of the L-shaped continuous-phase outlet parts 111, 121 are disposed in the same direction as the direction of the dispersed-phase outlet part 101 so that the flowing direction of the continuous-phase material 3 matches with the flowing direction of the dispersed-phase material 2. The downstream ends of the continuous-phase outlet parts 111, 121 communicate with the confluence part 131 of the third flow system 13 serving as the continuous-phase outlets 111a, 121a, as in the case of the dispersed-phase outlet part 101.

With the above structure, when the dispersed-phase material 2 and the continuous-phase material 3 flow out of the dispersed-phase outlet 101a and the continuous-phase outlets 111a, 121a and flow into the confluence part 131, respectively, the dispersed-phase material 2 and the continuous-phase material 3 flow in the same direction. Thus a constant static pressure in the confluence part 131 is easily realized. Further, the continuous-phase outlets 111a, 121a of the second flow systems 11, 12 are symmetrically disposed to each other with respect to the dispersed-phase outlet 101a of the first flow system 10. This causes the dispersed-phase material 2 to flow between and in parallel to the flows of the continuous-phase material 3. Thus, a constant static pressure is more easily realized. Note that the wall parts between the dispersed-phase outlet 101a and the continuous-phase outlets 111a, 121a are preferably such that the surficial area of their longitudinal cross section is reduced from the upperstream side to the leading end on the downstream side.

The passage space of each of the continuous-phase outlet parts 111, 121 is such that the longitudinal cross section of the passage space taken perpendicularly to the flowing direction of the continuous-phase material 3 has a rectangular shape. Further, the continuous-phase outlets 111a, 121a which are end surfaces of the continuous-phase outlet parts 111, 121 also have a rectangular shape. Note that the shape of the continuous-phase outlets 111a, 121a is not limited to a rectangle; however, the shape of the continuous-phase outlets 112a, 121a is preferably symmetrical with respect to a line in a direction of symmetrically arranging the continuous-phase outlets 111a, 121a with respect to the dispersed-phase outlet 101a. This is because, a constant static pressure is more easily realized, because such a shape allows the dispersed-phase material 2 and the continuous-phase material 3 to flow out to the confluence part 131, with an even flow-out dimension relative to the direction of symmetrical arrangement and a direction vertical to the direction of the symmetrical arrangement.

Further, the continuous-phase outlets 111a, 121a are such that their opening diameters in the direction vertical to the line in the direction of the symmetrical arrangement are greater than the opening diameter of the dispersed-phase outlet 101a. This way, the continuous-phase outlets 111a, 121a each take up a broad area around the dispersed-phase outlet 101a. It is therefore possible to have the flows of the continuous-phase material 3 envelop the entire dispersed-phase material 2 flowed out of the dispersed-phase outlet 101a, while these materials are flowing.

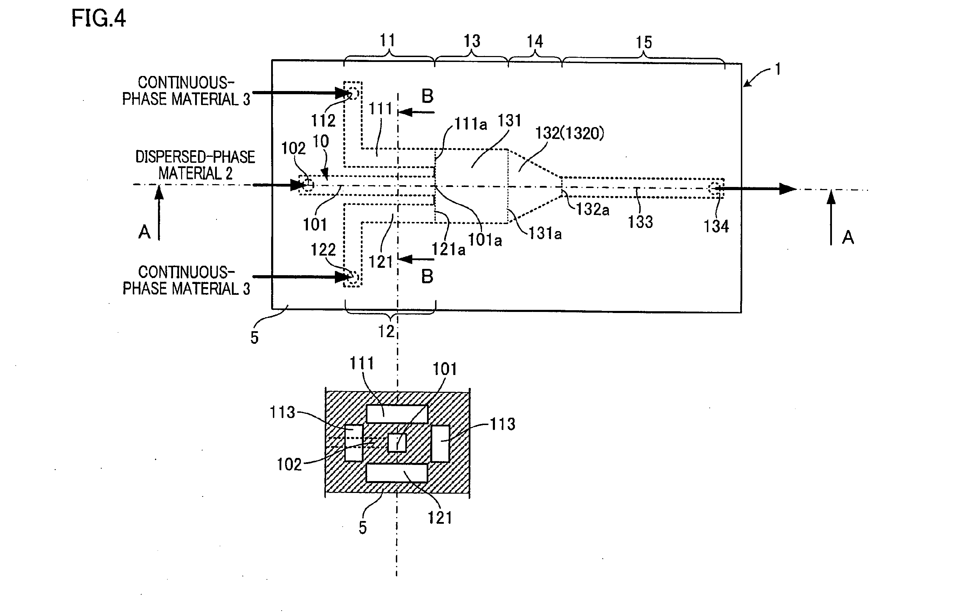

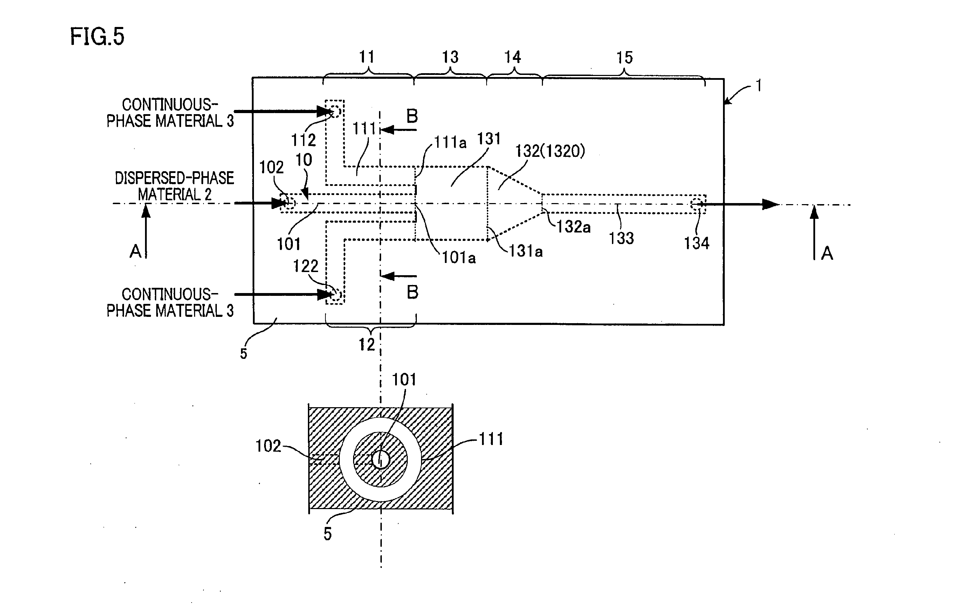

Note that, in addition to the continuous-phase outlet parts 111, 121 (continuous-phase outlets 111a, 121a), the droplet formation device 1 may have continuous-phase outlet parts 113 (continuous-phase outlets) symmetrically arranged with respect to the line in the direction of the symmetrical arrangement, as shown in FIG. 4. Further, as shown in FIG. 5, the continuous-phase outlet part 111 (continuous-phase outlet) may be formed in an annular shape about the dispersed-phase outlet part 101(dispersed-phase outlet 101a). In such cases, the entire dispersed-phase material 2 is more easily enveloped in the continuous-phase material 3.

### (Droplet Formation Device 1: Third Flow System 13)

As shown in FIG. 1 and FIG. 2, on the downstream side of the first flow system 10 and the second flow systems 11, 12 is disposed a third flow system 13. The third flow system 13 has a confluence part 131, a droplet formation part 132, a guide 133, and a droplet output part 134. The confluence part 131 is formed so as to allow the dispersed-phase material 2 to flow into the continuous-phase material 3 under a constant static pressure. Note that the pressure of the continuous-phase material 3 is preferably higher than that of the dispersed-phase material 2. This makes the flow of the continuous-phase material 3 to get nearby the dispersed-phase outlet 101a, thus preventing the dispersed-phase material 2 from contacting the periphery of the dispersed-phase outlet 101a.

Specifically, the confluence part 131 has a parallelepiped shape so as to avoid variation in the cross section of the passage relative to the flowing direction. Note that the confluence part 131 does not necessarily have to be formed in a parallelepiped shape as long as the cross section of the passage is constant throughout the flowing direction. The confluence part 13 may be in the form of a prism having a cross section in a shape of a circle, ellipsoid, triangle, or any other polygons. The upperstream side end surface of the confluence part 131 communicates with the dispersed-phase outlet 101a and the continuous-phase outlets 111a, 121a, while the downstream side end surface of the same is opened to serve as the flow-out port 131a and communicates with the droplet formation part 132.

The confluence part 131 with the above structure causes convergence of the flow of the dispersed-phase material 2 from the dispersed-phase outlet 101a and the flows of the continuous-phase outlets 111a, 121a from the continuous-phase material 3 so as to cause the dispersed-phase material 2 to flow into the liquid of the continuous-phase material 3 under a constant static pressure. This way, when the flows of the dispersed-phase material 2 and the continuous-phase material 3 are converged, it is possible to restrain deviation in these flows. Thus, substantially the entire dispersed-phase material 2 is able to flow straight forward in the flowing direction. Reduction of possibility of the dispersed-phase material 2 contacting the periphery of the dispersed-phase outlet 101a restrains the dispersed-phase material 2 from adhering to the dispersed-phase outlet 101a.

On the downstream side of the confluence part 131 is disposed a droplet formation part 132. The droplet formation part 132 is a part in which the dispersed-phase material 2 is allowed to become droplets by means of cohesive force. The confluence part 131 and the droplet formation part 132 allow the dispersed-phase material 2 to flow in the continuous-phase material 3 under a constant static pressure, form a stick-like flow continuous from the dispersed-phase.outlet 101a, while restraining variation in the outline of the dispersed-phase material, and separate the dispersed-phase material 2 at substantially constant intervals to form droplets 21 of the dispersed-phase material 2 having substantially the same volume.

Further, the droplet formation part 132 has a reduction part 1320 whose flow passage area is reduced from the upperstream side towards the downstream side. The reduction part 1320 may be disposed in a part of the droplet formation part 132. This way, the droplet formation part 132, with the reduction part 1320, directs the flow of the continuous-phase material 3 towards the dispersed-phase material 2 to apply an external force to the dispersed-phase material 2, thereby forcedly dividing the dispersed-phase material 2 into droplets. The droplet formation part 132 may be structured so that a laser beam is applied to the dispersed-phase material 2. In this case, the dispersed-phase material 2 is divided at timing where heat energy of the laser beam is applied to the dispersed-phase material 2.

The downstream end of the droplet formation part 132 is opened to serve as a flow-out port 132a. The flow-out port 132a is disposed to face the dispersed-phase outlet 101a. The flow-out port 132a is communicated with a guide 133. The area of the cross section of the guide 133 perpendicular to the flowing direction is made constant to achieve a constant static pressure to the droplets 21. Thus, when divided pieces of the dispersed-phase material 2 become droplets 21 having a spherical shape with a minimum surficial area so as to minimize the free energy on their surfaces, the guide 133 allows the droplets 21 to flow under a constant static pressure while restraining variation in the outline of the droplets 21, thereby forming the droplets 21 into uniform spherical droplets 21.

Note that when the dispersed-phase material 2 is a gelatin material, the guide 133 is preferably provided with a heat exchanging mechanism or the like for cooling down the continuous-phase material 3 to the gelation temperature of the dispersed-phase material 2. This is because, bringing down the temperature of the continuous-phase material 3 to the gelation temperature of the dispersed-phase material 2 facilitates solidification of the droplets 21, and restrains gel particles 22 from being deformed or divided by collision of the gel particles 22 with one another, by a stress, a shear force, or the like in a post process, while preventing adhesion or cohesion of the gel particles 22.

On the downstream end side of the guide 133 is disposed a droplet output part 134. The droplet output part 134 is formed as a through hole extending in a direction corresponding to the thickness direction of the base 5. The lower end of the droplet output part 134 communicates with the guide 133. On the other hand, the upper end of the droplet output part 134 opens on the top surface of the base 5. The upper end (opening) of the droplet output part 134 is connected to a mechanism or a device for use in a post process such as cooling process or the like.

### (Droplet Formation Device 1: Base 5)

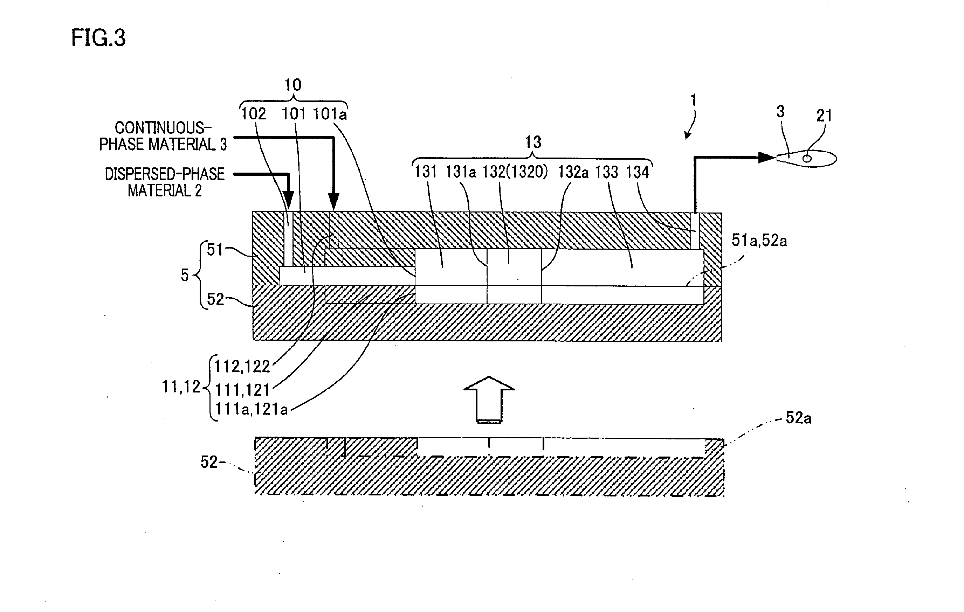

As shown in FIG. 3, the base 5 of the droplet formation device 1 with the above described structure is constituted by a first base member 51 and a second base member 52. The base 5 is made of a material hardly wettable with respect to the dispersed-phase material 2. Specifically, the base 5 is made of polypropylene, acrylic resin, or the like. The first base member 51 and the second base member 52 have a first border surface 51a and a second border surface 52a, respectively. The first base member 51 and the second base member 52 are formed into one piece by facing and combining the first border surface 51a and the second border surface 52a to and with each other.

On the first border surface 51a of the first base member 51 is a first passage forming part having grooves and flat surfaces which form the upper sides of the first flow system 10, the second flow systems 11, 12, and the third flow system 13. Specifically, the first passage forming part is structured so as to form the dispersed-phase outlet part 101, the dispersed-phase outlet 101a, the continuous-phase outlet parts 111, 121, the continuous-phase outlets 111a, 121a, the confluence part 131, the flow-out port 131a, the droplet formation part 132, the flow-out port 132a, and the guide 133. Further, on the first base member 51 is formed the dispersed-phase outlet part 101, the continuous-phase outlet parts 111, 121, and the droplet output part 134.

On the other hand, on the second border surface 52a of the second base member 52 is a second passage forming part having grooves and flat surfaces which form the lower sides of the first flow system 10, the second flow systems 11, 12, and the third flow system 13. Specifically, the second passage forming part of the second border surface 52a is structured so as to form the dispersed-phase outlet part 101, the dispersed-phase outlet 101a, the continuous-phase outlet parts 111, 121, the continuous-phase outlets 111a, 121a, the confluence part 131, the flow-out port 131a, the droplet formation part 132, the flow-out port 132a, and the guide 133.

Note that the base 5 does not necessarily have to be constituted by the first base member 51 and the second base member 52, provided that the base 5 is made of at least one member. To form the base 5 in one piece, there is a method of using an inkjet for three dimensionally piling up a resin to become the base 5, and a method of using a laser beam applied to a piece of resin, to three-dimensionally form the base 5. Exemplary methods for forming the grooves and the holes of the first base member 51 and the second base member 52 include cutting, laser machining, etching, and the like.

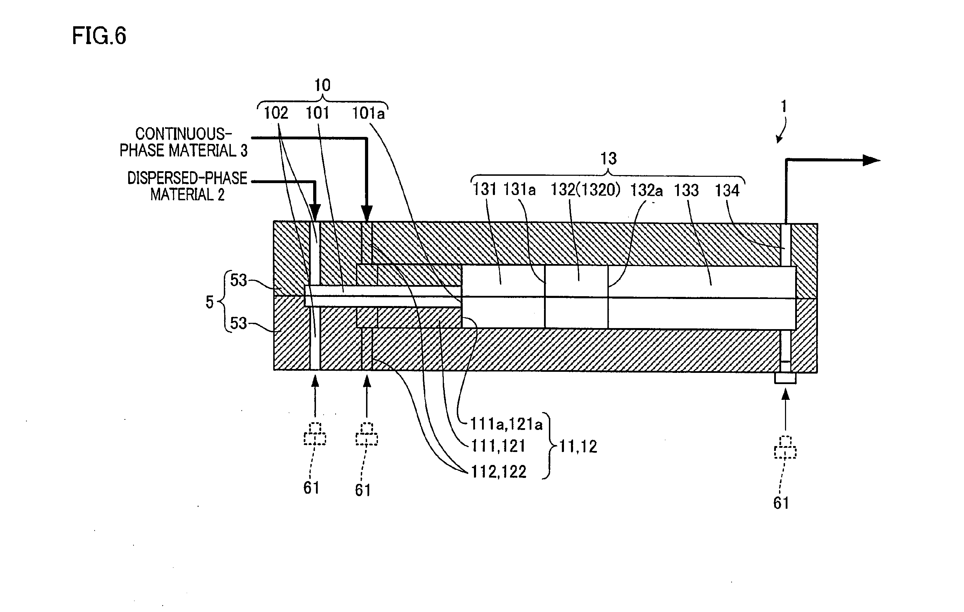

Further, as shown in FIG. 6, the base 5 may be formed by combining base members 53 having identical grooves and identical through holes. This is advantageous in that structuring the base 5 only requires a single type of the base members 53. By using in combination the base members 53 with different groove depths, it is possible to form a base 5 with different flow passage areas. When using such a base 5, the dispersed-phase material supply part 102, the continuous-phase outlets 111a, 121a, and the droplet output part 134 formed on one of the base members 53 are plugged by plugging members 61.

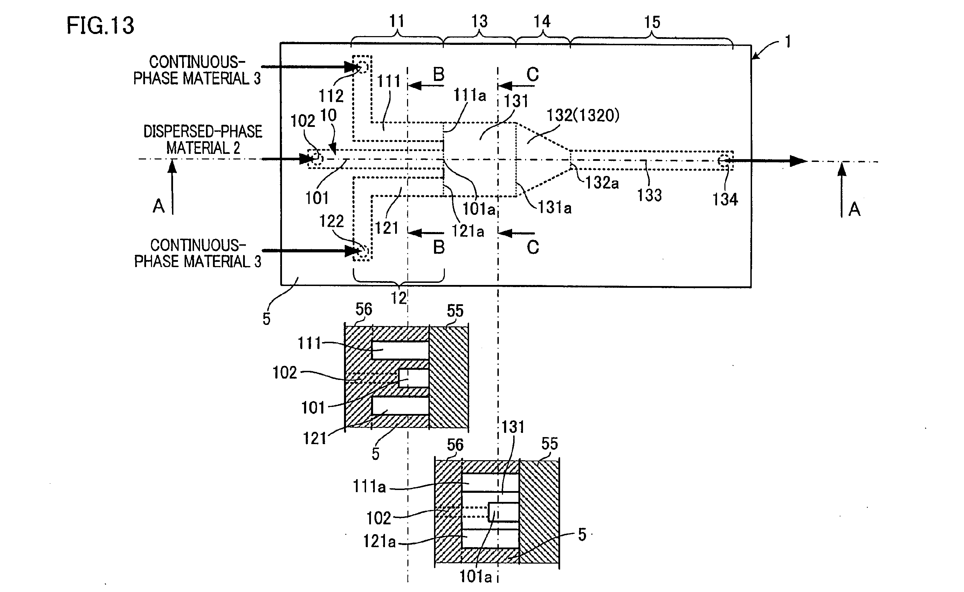

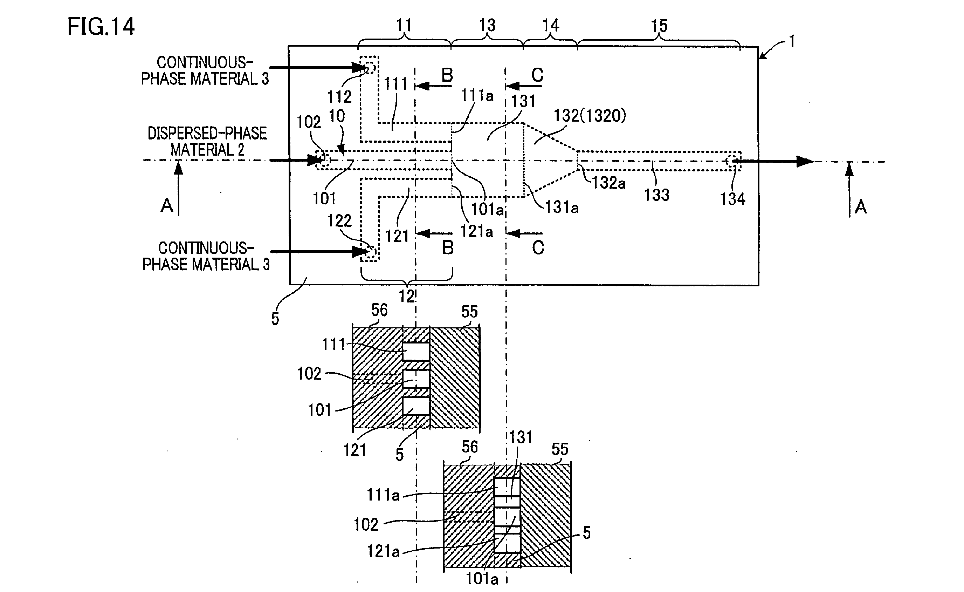

Further, as shown in FIG. 13 and FIG. 14, the base 5 may be formed by combining a first base member 56 having grooves and through holes, with a flat second base member 55 which is capable of sealing the groove and the openings of the first base member 56. This requires processing of the groove or the like only for the first base member 56. The second base member 55 is formed simply by cutting out a flat plate. Thus, the base 5 is easily manufactured. Further, as shown in FIG. 14, the depths of all the grooves may be made the same, in which case processing of the grooves is simplified.

### (Details of first to third flow systems 10, 11, 12, 13)

The following details more specifically the flow systems 10, 11, 12, and 13 each having the above described structure.

As shown in FIG. 1 and FIG. 2, the positional relation and the relation of the opening areas between the dispersed-phase outlet 101a and the continuous-phase outlets 111a, 121a are not particularly limited, as long as that the dispersed-phase material 2 is able to flow into and flow within the continuous-phase material 3 under a constant static pressure. Accordingly, the positional relation of the dispersed-phase outlet 101a to the continuous-phase outlets 111a, 121a may be such that the position of the dispersed-phase outlet 101a and those of the continuous-phase outlets 111a, 121a are aligned in the same position relative to the flowing direction, or that the position of the dispersed-phase outlet 101a is relatively downstream side of the continuous-phase outlets 111a, 121a relative to the flowing direction.

The relative relation of the opening areas (ratio) of the dispersed-phase outlet 101a to the continuous-phase outlets 111a, 121a is such that, where the opening area of the dispersed-phase outlet 101a is "1", the opening area of each of the continuous-phase outlets 111a, 121a is at least "1.0", preferably at least "1.2", and more preferably at least "2.0", but not more than "20.0", preferably not more than "5.0", and more preferably not more than "3.0". Note that, in this case, the respective flow velocity of the dispersed-phase material 2 and the continuous-phase material 3 are supposed to be substantially the same.

Specifically, when the openings of the dispersed-phase outlet 101a and the continuous-phase outlets 111a, 121a are rectangular, the size (unit: mm) of the dispersed-phase outlet 101a relative to the thickness direction is at least "0.01", preferably at least "0.05", more preferably at least "0.1", but not more than "10.0", preferably not more than "5.0", and more preferably not more than 1.0". Further, the size of the dispersed-phase outlet 101a relative to the width direction is at least "0.01", preferably at least "0.05", and more preferably at least "0.1", but not more than "10.0", preferably not more than "5.0", and more preferably not more than "1.0".

On the other hand, the size (Unit: mm) of each of the continuous-phase outlets 111a, 121a relative to the thickness direction is at least "0.01", preferably at least "0.05", and more preferably at least "0.1", but not more than "50.0", preferably not more than "10.0", and more preferably not more than "5.0". Further, the size of the continuous-phase outlets 111a, 121a relative to the width direction is at least "0.01", preferably at least "0.05", and more preferably at least "1.0", but not more than "10.0", preferably not more than "5.0", and more preferably not more than "1.5".

With the above described relative relation (ratio) of the opening areas of the dispersed-phase outlet 101a and the continuous-phase outlets 111a, 121a, droplets 21 with uniform grain diameter are obtainable.

Further, the relation of the dispersed-phase outlet 101a to the grain diameter of each droplets 21 is such that, where the grain diameter is "1" , the opening area of the dispersed-phase outlet 101a is at least "0.0025", preferably at least "0.01", and more preferably at least "0.25", but not more than "400", preferably not more than "100", and more preferably not more than "20". This enables significant change in the grain diameter of the droplets 21 by changing the opening area of the dispersed-phase outlet 101a; i.e., replacing the droplet formation device 1 with another droplet formation device 1, and enables delicate adjustment of the grain diameter of the droplets 21 by adjusting the flow velocity, temperature, viscosity of the dispersed-phase material 2, in the process of forming the droplets 21.

Further, the relation of the dispersed-phase outlet 101a to the embolus particles 25 is such that, where the embolus particles 25 are 40µm to 2000µm, the opening area of the dispersed-phase outlet 101a is preferably 400 to 1000000. In this case, by adjusting the flow velocity of the dispersed-phase material 2, embolus particles 25 of a desirable grain diameter is obtainable without a need of replacing the droplet formation device 1.

The relative relation (ratio) of the passage length of the third flow system 13 at the confluence part 131 to the opening area of the dispersed-phase outlet 101a is such that, where the opening area of the dispersed-phase outlet 101a is "1", the passage length of the confluence part 131 is at least "0.1", preferably at least "0.5", and more preferably at least "1", but not more than "20" , preferably not more than "10", and more preferably not more than "5". This way, in the confluence part 131, the dispersed-phase material 2 is allowed to flow out and flow under a constant static pressure.

### (Dispersed-Phase Material 2)

The dispersed-phase material 2 is not particularly limited as long as it is a liquid having a cohesive force. For example, a gelatin is used as the dispersed-phase material 2 in cases of forming embolus particles 25 for use in an artery embolization method for curing liver cancer, uterine myoma, renal cancer, kidney cancer, and the like. The type of gelatin is not particularly limited. For example, a gelatin prepared using beef bones, beef skin, pork bones, pork skin, or the like is adoptable.

The temperature of an aqueous gelatin solution which is the liquid of the dispersed-phase material 2 needs to be at least 20°C which is the gelation temperature of the gelatin. This is because, temperatures of the aqueous gelatin solution lower than the gelation temperature of the gelatin causes gelation of the aqueous gelatin solution at the dispersed-phase outlet 101a. This leads to clogging of the dispersed-phase outlet 101a, which disables outputting of a constant amount of the aqueous gelatin solution and causes difficulties in separating the aqueous gelatin solution from the dispersed-phase outlet 101a, consequently leading to variation in the grain diameter.

The concentration of the aqueous gelatin solution is preferably 2 wt. % to 20 wt. %, and more preferably 5 wt. % to 15 wt. %. The concentration of the aqueous solution less than 2 wt. % causes difficulties in forming spherical particles. On the other hand, the concentration of more than 20 wt. % causes the aqueous solution to be highly viscous, causing difficulties in the flow of the aqueous solution in the dispersed-phase outlet part 101 and flowing out of the aqueous solution from the dispersed-phase outlet 101a.

The shape of the gelatin particles from the states of droplets 21 to the embolus particles 25 is preferably spherical, not an indeterminate form. When the embolus particles 25 with a spherical shape are injected into a blood vessel of a patient to block the blood vessel, it is possible to block the blood vessel at a portion closer to the targeted part, while reducing the stress to the patient. Further, to enable selective usage of the particles based on the sizes of the blood vessels to avoid negative effect to the healthy portions while blocking the blood vessel at the closest possible portion to the targeted part, the grain diameter of gelatin particles suitably falls within any of the following three ranges: 40 to 100µm, 150 to 300µm, and 400 to 1000µm. Particles with small grain diameters of less than 40µm are not preferable, because such particles may block the blood vessel at a portion other than the intended portion.

### (Continuous-Phase Material 3)

The continuous-phase material 3 is not particularly limited as long as it is a liquid that generates an interfacial tension at the interface with the dispersed-phase material 2. When the continuous-phase material 3 is a hydrophobic solvent to be used in the embolus particles 25, the continuous-phase material 3 is a material pharmaceutically allowable. For example, a vegetable oil such as olive oil, a fatty acid such as oleic acid, a fatty acid ester such as triglyceryl caprylate, a hydrocarbon based solution such as hexane are adoptable. Of those, olive oil and triglyceryl caprylate which is fatty acid ester hardly oxidized are particularly preferable.

### (Manufacturing of Droplet Formation Device 1)

As shown in FIG. 3, the first base member 51 and the second base member 52 each having a parallelepiped shape are prepared. Through a cutting process to the first border surface 51a of the first base member 51, there is formed the first passage forming part in the form of grooves and flat surfaces to become the upper part of the first flow system 10, the second flow systems 11, 12, and the third flow system 13. Then, through holes to become the dispersed-phase outlet part 101, the continuous-phase outlet parts 111, 121, and the droplet output part 134 are formed. Further, on the second border surface 52a of the second base member 52 are formed the second passage forming part in the form of grooves and flat surfaces to become the lower part of the first flow system 10, the second flow systems 11, 12, and the third flow system 13. After this, the first border surface 51a of the first base member 51 and the second border surface 52a of the second base member 52 are liquid-tightly combined with each other with a use of an adhesive agent, screws or the like, to form the base 5 constituting the droplet formation device 1.

Next, the dispersed-phase outlet part 101 is connected to the device for supplying the dispersed-phase material 2 via a tube, and the continuous-phase outlet parts 111, 121 are each connected to the device for supplying the continuous-phase material 3 via a tube. Further, the droplet output part 134 is connected to a post process via a tube. This way, a droplet formation apparatus for executing a droplet formation process is structured. Note that the post process varies depending on the usage. In cases of forming embolus particles 25, cooling is the post process, followed by dehydration, cleaning, and crosslinking.

### (Formation Method of Embolus Particles 25 using Droplet Formation Device 1)

### (Droplets Formation Step)

As shown in FIG. 1, after the droplet formation device 1 is assembled as a droplet formation apparatus as mentioned above, a gelatin as the dispersed-phase material 2 is caused to swell in the water of approximately 0°C in temperature. Next, stirring takes place for approximately 0.5 to 1.5 hours with a use of a stirrer, a mixing blade, a shaker, or the like, thus completely dissolving the gelatin in the warm water of approximately 40°C to 60°C. After that, olive oil as the continuous-phase material 3 is supplied to the second flow systems 11, 12 of the droplet formation device 1, and the gelatin is supplied to the first flow system 10 of the droplet formation device 1 to form gel particles 22 made of gelatin.

In detail, from the device for supplying the continuous-phase material 3, olive oil in the liquid phase (continuous-phase material 3) is supplied at a predetermined temperature and flow velocity. Specifically, the temperature is 40°C, and the flow velocity is 0.002 m/s. Then, from the device for supplying the dispersed-phase material 2, the gelatin in the liquid phase (dispersed-phase material 2) is supplied at a predetermined temperature and flow velocity, and at a timing so that the olive oil fills up the third flow system 13 and is output in a stable quantity from the droplet output part 134. Specifically, the temperature is 40°C, and the flow velocity is 0.02 m/s. Note that the temperatures of the dispersed-phase material 2 and the continuous-phase material 3 are preferably the same so as to avoid a change in the physical property of the dispersed-phase material 2 in the confluence part 131.

As shown in FIG. 1, when the gelatin and the olive oil are supplied, the gelatin flows in the dispersed-phase material supply part 102 and the olive oil flows in the continuous-phase outlet parts 111, 121. The gelatin flowed out of the dispersed-phase outlet 101a and the olive oil flowed out of the continuous-phase outlets 111a, 121a are converged at the confluence part 131 in such a manner that the gelatin exist within the olive oil.

At this time, the continuous-phase outlet parts 111, 121 are designed so as to output the olive oil parallel to the flowing direction of the gelatin. Thus, when the gelatin and the olive oil flow out of the dispersed-phase outlet 101a and the continuous-phase outlets 111a, 121a, respectively, and flow into the confluence part 131, the gelatin and the olive oil flow in a single direction. Further, since the continuous-phase outlets 111a, 121a are symmetrically arranged with respect to the dispersed-phase outlet 101a, the gelatin flows in parallel to the flows of olive oil while being sandwiched therebetween.

Further, the dispersed-phase outlet 101a and the continuous-phase outlets 111a, 121a are formed in a rectangular shape which is symmetrical with respect to the line in the direction of symmetrical arrangement of the dispersed-phase outlet 101a and the continuous-phase outlets 111a, 121a. It is therefore possible to cause the gelatin and the olive oil to flow into the confluence part 131, with an even flow-out dimension relative to the direction of symmetrical arrangement and a direction vertical to the direction of symmetrical arrangement. Further, the continuous-phase outlets 111a, 121a each have a larger opening diameter than that of the dispersed-phase outlet 101a, relative to the direction vertical to the line in the direction of symmetrical arrangement. Thus, with the openings of the continuous-phase outlets 111a, 121a taking up a broad area around the dispersed-phase outlet 101a, the flows of olive oil envelop therein the entire flow of the gelatin.

This way, in the confluence part 131, a constant static pressure is easily realized between the gelatin and the olive oil. As a result, the gelatin less likely contacts the periphery of the dispersed-phase outlet 101a, as compared with a case where the static pressure is varied immediately after the gelatin flows out of the dispersed-phase outlet 101a. As such, problems attributed to adhesion of the gelatin around the dispersed-phase outlet 101a hardly take place.

Further, when the gelatin flows in the olive oil, the gelatin forms a stick-like flow continuous from the dispersed-phase outlet 101a. The free energy on the surface of the gelatin increases proportionally to the surficial area of the stick-like flow of gelatin. When the flows in the droplet formation part 132 elongate the flow of gelatin, thus causing the free energy on the flow of gelatin to increase up to a predetermined level or higher, the stick-like flow of gelatin is deformed due to a cohesive force and is divided into pieces. At this time, since the gelatin flows in the confluence part 131 under a constant static pressure, variation in the outline of the stick-like flow of gelatin is kept small. The stick-like flow of gelatin is therefore divided at substantially the same intervals, thus forming gelatin droplets 21 with substantially the same volume.

Note that, with the droplet formation part 132 of the present embodiment with the reduction part 1320 whose flow passage area is reduced towards the downstream side, the flowing direction of the olive oil is converged towards the dispersed-phase material 2. Application of the external force to the gelatin facilitates dividing of the gelatin by means of cohesive force.

When the divided pieces of the gelatin flow in the droplet output part 134, the pieces of gelatin are formed into spherical droplets with minimum surficial areas by means of cohesive force so as to minimize the free energy on its surface. Then, spherical gelatin droplets 21 are consecutively formed in substantially the same size and are output from the droplet output part 134.

the grain diameters of the droplets 21 are confirmed, when the droplets 21 are output from the droplet formation device 1 as described above. By adjusting the flow velocity (flow amount per unit time) and the temperatures of the dispersed-phase material 2 and the continuous-phase material 3, the grain diameters of the droplets 21 are adjusted to the same desirable grain diameter.

### (Cooling)

The uniform droplets 21 along with the olive oil are supplied into olive oil in a container 4 having a temperature controlling mechanism and a stirring mechanism. At this time, the temperature of the olive oil in the container 43 is between 0°C and 60°C; e.g., not more than the gelation temperature of the gelatin. Starting gelation of the droplets 21 immediately after the droplets 21 are supplied to the container 4 restrains deformation or division of the gel particles 22 due to an external force stemming from, for example, collision of the gel particles 22 against one another, while preventing adhesion or cohesion of the droplets 21 with one another. Note that, if the olive oil needs to be cooled down to the solidification point of the olive oil (i.e., oil) or below, when cooling for causing gelation after formation of the gelatin droplets, a dehydration solvent is preferably added (because the solidification point of such a solvent is low) in advance in the stage of forming the droplets (in droplet formation step). This brings down the solidification point of the mixture, and prevents solidification of the emulsion.

### (Dehydration)

When a predetermined number or a predetermined quantity or more of the gel particles 22 are formed in the container 43, a dehydration solvent at a temperature not more than the gelation temperature is supplied and mixed. Then, mixing by stirring is carried out for at least 15 minutes, to sufficiently dehydrate the droplets 14. This prevents the gel particles 22 from cohering to one another, while producing dehydrated particles 23 which are subj ectable to the post process of evenly crosslinking. Examples of the dehydration solvent includes: a ketone-based solvent such as acetone; an alcohol based solvent such as isopropyl alcohol; an ester based solvent such as ethyl acetate; a hydrocarbon based solvent such as toluene, hexane; a halogen based solvent such as dichloroethane, and the like.

### (Cleaning)

At the same time as the dehydration, or before or after the dehydration, cleaning is carried out. Specifically, a poor solvent which does not dissolve the gelatin is supplied to clean the dehydrated particles 23. The poor solvent is preferably used at a temperature not more than the gelation temperature of the gelatin. Examples of the poor solvent which does not dissolve the gelatin includes: a ketone-based solvent such as acetone; an alcohol based solvent such as isopropyl alcohol; an ester based solvent such as ethyl acetate; a hydrocarbon based solvent such as toluene, hexane; a halogen based solvent such as dichloroethane, and the like. Where one cycle of operation of cleaning is cleaning of 15 to 30 minutes using approximately 200 to 300 ml of the solvent, four to six cycles of operation are preferably carried out for approximately 2 to 15 grams of the gel particles 22.

### (Drying)

Next, the dehydrated particles 23 are taken out from the container 4, and are dried at temperatures that do not cause melting of the gelatin. This removes the cleaning solvent on the dehydrated particles 23, and removes water in the gelatin particles 31, thus forming the dehydrated particles 23 into dry particles 24. Various methods are adoptable as the method for drying: e.g. , draught trying, vacuum drying, freeze-drying, or the like. It is however preferable to dry the particles for 12 hours or longer at a temperature between 5°C and 25°C. It is particularly preferable to dry the particles under depressurized atmosphere.

### (Crosslinking)

Next, the dry particles 24 are heated for 0.5 to 120 hours, at temperatures between 80°C to 250°C. The conditions for heating are determined according to the time needed for the embolus particles 25 to be completely decomposed in a blood vessel, i.e., the required period from the point of blocking the blood vessel with the embolus particles 25 to a point of resuming the blood flow in the blood vessel. The heating period is dependent on the heating temperature. In general, to necrotize a tumor (cancer), the blood vessel needs to be blocked for 2 to 3 days. Therefore, for example, the conditions for crosslinking by heating to set a decomposition period of the embolus particles 25 to 3 to 7 days are: heating for at least 1 hour, not more than 24 hours, at temperatures between 100°C to 180°C. To avoid a problem such as oxidization of the gelatin particles 31, the crosslinking by heating is preferably carried out under a depressurized atmosphere, or an inert gas atmosphere.

Thus, an embodiment of the present invention is described above. However, the above embodiment solely serves as a specific example, and by all means does not limit the present invention. Specific structure or the like are modifiable as needed. Further, the action and effect described in the embodiment of the present invention are no more than examples given as the most preferable action and effect brought about by the present invention, and the action and effect of the present invention are not limited to those described in the embodiment of the present invention.

For example, the present embodiment deals with a case where the droplets 21 are successfully formed one-by-one with a use of the droplet formation device 1 having a single droplet formation path ranging from the first flow system 10 to the third flow system 13. The present invention however is not limited to this. To improve the production efficiency, it is possible to adopt a droplet formation device 201 having a plurality of numbered droplet formation paths aligned in parallel.

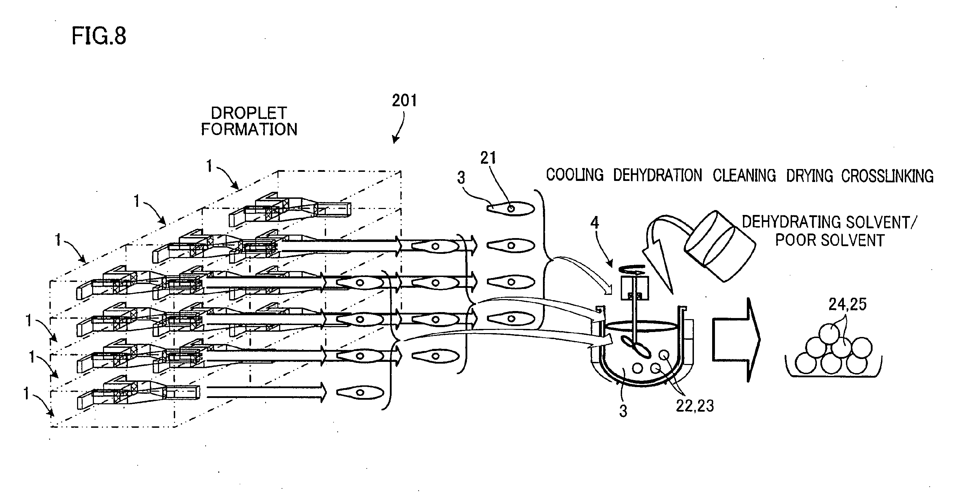

Specifically, as shown in FIG. 8, the droplet formation device 201 may have a plurality of droplet formation devices 1 each having a single droplet formation path, and the droplet formation devices 1 may be aligned in parallel to one another in the up/down directions and in the left/right directions. These droplet formation devices 1 may be aligned in parallel to one another in an up/down direction or in a left/right direction. This enables feeding of the droplets 21 in number corresponding to the number of the droplet formation devices 1 aligned in parallel to one another to the container 4 for the post process. It should be however noted that a single droplet formation device 1 may include a plurality of droplet formation paths. The plurality of droplet formation devices 1 may be annularly arranged in parallel to one another so that the droplet output parts 134 of the droplet formation devices 1 are directed towards the center. Further, it is possible to stack up and down structures each having the droplet formation devices 1 annularly arranged in parallel.

### [Examples]

### (Example 1)

First, analysis adopting VOF method (Volume of Fluid Method) was conducted on easiness of forming the droplets 21 when the dispersed-phase material 2 and the continuous-phase material 3 were caused to flow parallel to each other. The analysis conditions of the dispersed-phase material 2 and the continuous-phase material 3 were as follows. The flow rate of the dispersed-phase material was 1 ml/h. The flow rate of the continuous-phase material was 1 ml/h. The viscosity of the dispersed-phase material 2 was 0.06 mPas. The density of the dispersed-phase material 2 was 998 kg/m3. The viscosity of the continuous-phase material 3 was 0.6 mPas. The density of the continuous-phase material 3 was 910kg/m3. The interfacial tension was 0.02N/m. The contact angle (dispersed-phase material 2·continuous-phase material 3) was 140°.

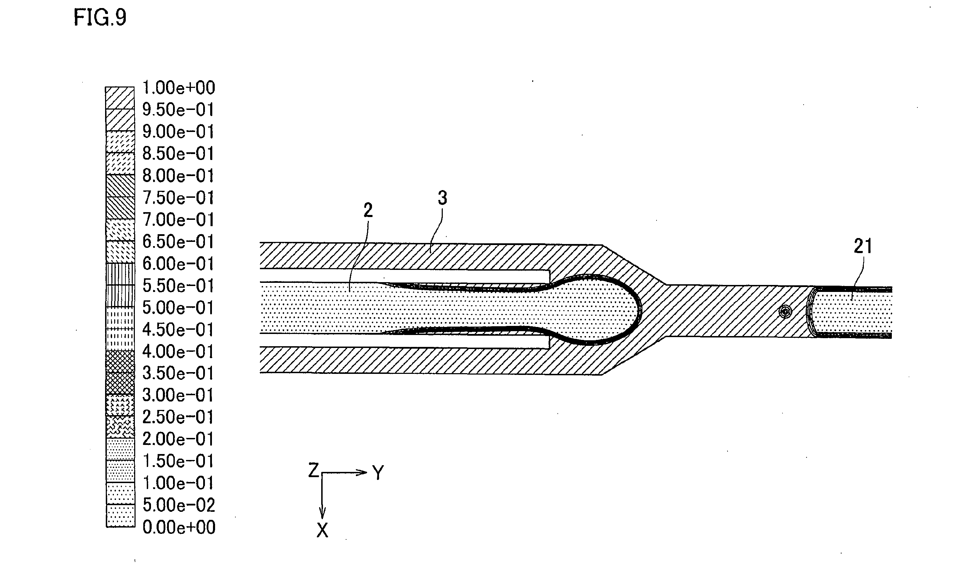

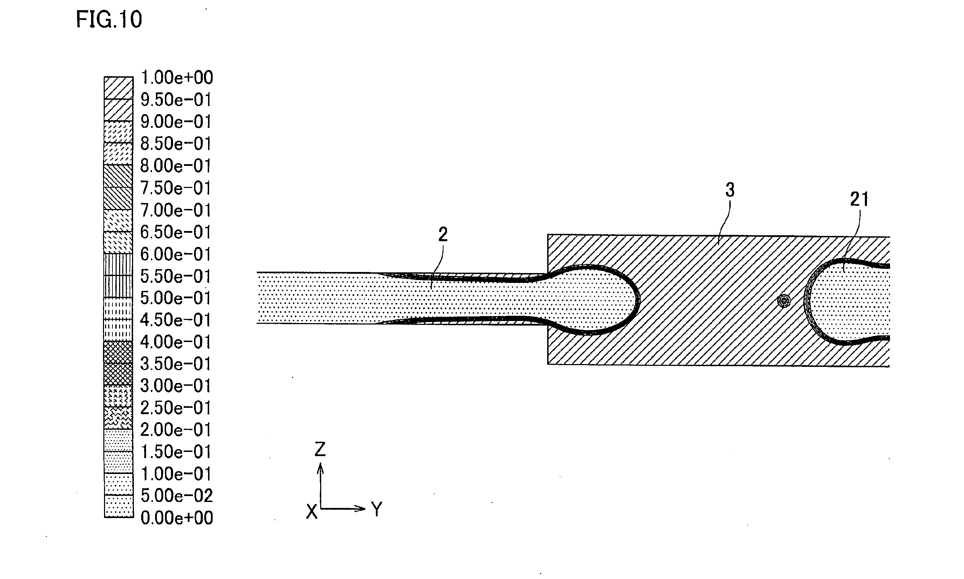

Further, the analysis conditions of the droplet formation device 1 were as follows. The dimension of the dispersed-phase outlet 101a was width (transversal dimension) 100µm × depth (longitudinal dimension)100µm. The dimension of the continuous-phase outlets 111a, 121a was width 50µm × depth 250µm. The dimension of the confluence part 131 was width 300µm × depth 250µm. The dimension of the droplet formation part 132 (reduction part 1320) was width 100µm × depth 250µm. The result of the analysis is shown in FIG. 9 and FIG. 10.

### (Comparative Example 1)

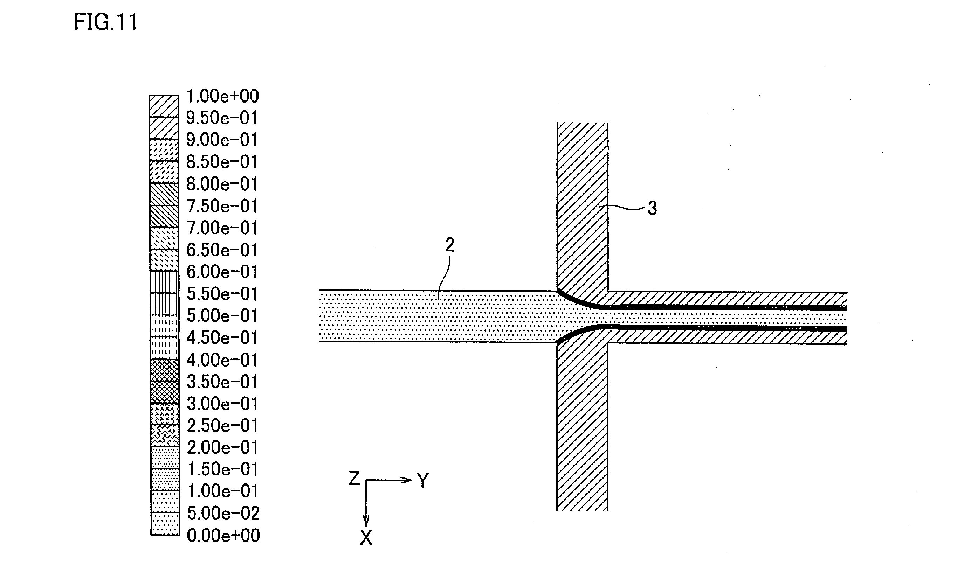

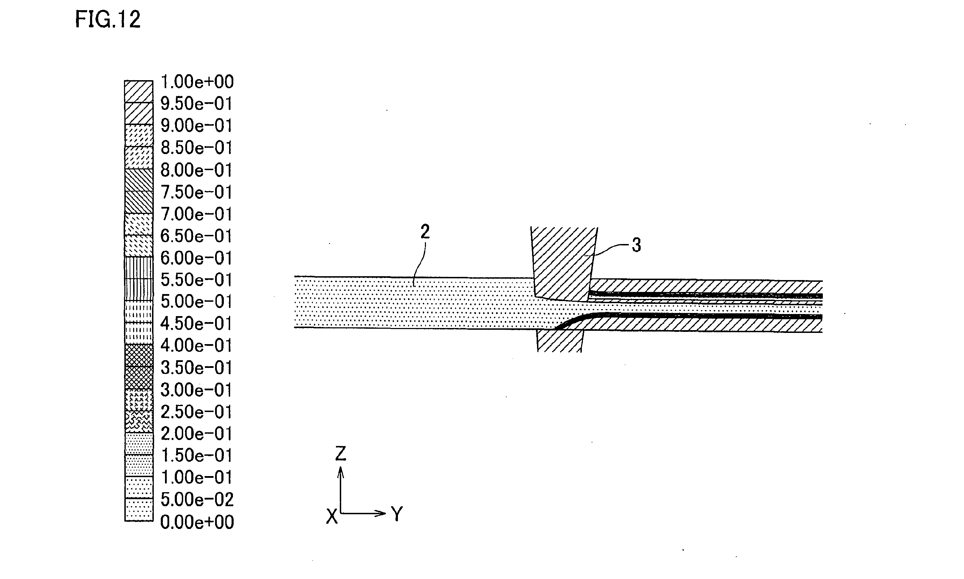

Next, under the same analysis conditions of the dispersed-phase material 2 and the continuous-phase material 3 as those of Example 1, analysis adopting VOF method (Volume of Fluid Method) was conducted on easiness of forming the droplets 21 when the continuous-phase material 3 was caused to flow perpendicularly to the flowing direction of the dispersed-phase material 2. In this case, the analysis conditions of the droplet formation device were as follows. The dimension of the dispersed-phase outlet was width 100µm × depth 100µm. The dimension of the continuous-phase outlet was width 100µm × depth 100µm. The dimension of the confluence part was width 100µm × depth 100µm. The dimension of the droplet formation part (reduction part) was width 100µm×depth 100µm. The result of the analysis is shown in FIG. 11 and FIG. 12.

### (Assessment)

There are following findings from the analyses results. Namely, in Example 1 where the dispersed-phase material 2 and the continuous-phase material 3 were caused to flow parallel to each other, the dispersed-phase material 2 was divided and formed into droplets. On the other hand, in Comparative Example 1 where the dispersed-phase material 2 and the continuous-phase material 3 were caused to flow perpendicularly to each other, the dispersed-phase material 2 was not divided and maintained the continuous state. Further, while the dispersed-phase material 2 did not adhere to the confluence part 131 or portions nearby the openings in Example 1, the dispersed-phase material 2 did adhere to the wall surface in Comparative Example 1.

### Reference Signs List

1. Droplet Formation Device
2. Dispersed-Phase Material
3. Continuous-Phase Material
4. Container
5. Base
10. First Flow System
11, 12. Second Flow System
13. Third Flow System
21. Droplets
22. Gel Particles
23. Dehydrated Particles
24. Dry Particles
25. Embolus Particles
51. First Base Member
52. Second Base Member
101. Dispersed-Phase Outlet Part
101a. Dispersed-Phase Outlet
111, 121. Continuous-Phase Outlet Part
111a, 121a. Continuous-Phase Outlet
131. Confluence Part
132. Droplet Formation Part
133. Guide

## Claims

1. A droplet formation device, comprising:
a dispersed-phase outlet through which a liquid of a dispersed-phase material having a cohesive force flows out;
one or more continuous-phase outlets through which a liquid of the continuous-phase material flows out, the continuous-phase material capable of generating an interfacial tension at its interface with the dispersed-phase material;
a confluence part in communication with the dispersed-phase outlet and the one or more continuous-phase outlets, through which the dispersed-phase material flows in the liquid of the continuous-phase material under a constant static pressure; and
a droplet formation part disposed on a downstream side of the confluence part, in which the dispersed-phase material is allowed to become droplets by means of the cohesive force.

2. The droplet formation device, according to claim 1, further comprising:
a dispersed-phase outlet part through which the dispersed-phase material flows out in a predetermined direction from the dispersed-phase outlet; and
one or more continuous-phase outlet parts through which the continuous-phase material flows out from the one or more continuous-phase outlets, in parallel to the flowing direction of the dispersed-phase material.

3. The droplet formation device, according to claim 2, wherein
the one or more continuous-phase outlets comprises a plurality of continuous-phase outlets which are arranged symmetrically with respect to the dispersed-phase outlet.

4. The droplet formation device, according to claim 3, wherein
each of the dispersed-phase outlet and the continuous-phase outlets has a shape which is symmetrical with respect to a line in a direction of symmetrically arranging the dispersed-phase outlet and the continuous-phase outlets.

5. The droplet formation device, according to claim 4, wherein
an opening diameter of each of the continuous-phase outlet relative to a direction vertical to the line in the direction of the symmetrical arrangement is set to be larger than that of the dispersed-phase outlet.

6. The droplet formation device, according to claim 5, wherein
the droplet formation part has a reduction part whose flow passage area is reduced towards the downstream side.

7. The droplet formation device, according to claim 6, further comprising:
a first base member having a first border surface on which a first passage forming part is formed, the first passage forming part constituting parts of the dispersed-phase outlet, the dispersed-phase outlet part, the continuous-phase outlet, the continuous-phase outlet part, the confluence part, the droplet formation part, the reduction part, and a discharge port; and
a second base member having a second border surface combined with the first border surface of the first base member,
the second border surface having thereon a second passage forming part constituting parts of the dispersed-phase outlet, the dispersed-phase outlet part, the continuous-phase outlet, the continuous-phase outlet part, the confluence part, the droplet formation part, the reduction part, and the discharge port.

8. The droplet formation device according to any one of claims 1 through 7 for use in production of embolus particles.

9. A droplet formation method, comprising
causing a dispersed-phase material to flow into and flow within a liquid of a continuous-phase material under a constant static pressure, the continuous-phase material being capable of generating an interfacial tension at its interface with the dispersed-phase material, thereby forming the dispersed-phase material into droplets by a cohesive force.
